# DEMANDE DE BREVET EUROPEEN

(11) **EP 3 599 395 A1**
(43) Date de publication de la demande: **29.01.2020**
(21) Numéro de dépôt: 19184089.1
(22) Date de dépôt: 03.07.2019
(51) Int. Cl.: F16H 57/027

(54) **CAPUCHON D'AERATION D'UNE TRANSMISSION**

(30) Priorité: 25.07.2018 FR 1870864
(71) Demandeur: AKWEL, 01410 Champfromier (FR)
(72) Inventeur: HUGUES, Julien, 84800 L'ISLE SUR LA SORGUE (FR)

(57) **Abrégé**

Le capuchon (10) d'aération est adapté pour être monté autour d'une extrémité d'un tuyau (100) destiné à être raccordé à l'autre extrémité à une ouverture prévue dans un boîtier d'un composant automobile, ledit capuchon (10) comprenant une paroi latérale périphérique cylindrique (12) autour d'un axe principal X fermée par une paroi d'extrémité (14), un organe de tige central (18) faisant saillie axialement à partir d'une surface interne de la paroi d'extrémité (14) et étant pourvu d'un canal intérieur (20) d'aération débouchant radialement au moins à la base de l'organe de tige (18) en position de montage du tuyau (200).

## Description

### Domaine technique.

La présente invention concerne un capuchon d'aération d'une transmission, telle qu'une boîte de vitesse à commande manuelle ou automatique. Un tel dispositif est également couramment désigné par le terme « reniflard ».

Généralement, une transmission mécanique à rapports multiples, qu'elle soit manuelle, automatique ou semi-automatique, utilise un fluide disposé à l'intérieur de la transmission pour accomplir diverses fonctions. Par exemple, une transmission mécanique manuelle utilise un fluide pour la lubrification des pièces tournantes et engrenantes. Une transmission automatique quant à elle utilise un fluide pour produire et transférer de l'énergie hydrodynamique en plus d'assurer la lubrification des pièces rotatives.

Une telle transmission est généralement soumise à des variations de température qui entraînent une variation du volume du liquide de transmission. Il en résulte une différence de pression, dite pression différentielle, entre l'intérieur de la transmission et l'extérieur qui est soumis à la pression atmosphérique, également susceptible de varier.

Afin d'égaliser les pressions intérieure et extérieure, un certain nombre de fabricants ont équipé les boîtes de vitesse d'un évent ou d'un reniflard. Grâce au reniflard, lors du fonctionnement de la boîte de vitesse, le fluide contenu dans celle-ci s'échauffe et les vapeurs formées peuvent s'échapper à l'extérieur via le reniflard.

Ainsi, lorsque de la chaleur est générée dans la transmission, la température interne de l'air et du fluide hydraulique qui s'y trouve augmente, de même que la pression interne et l'air est refoulé vers l'extérieur de la transmission par l'intermédiaire du reniflard. Inversement, lorsque la température interne diminue par rapport à la température extérieure, la pression différentielle est inversée et l'air est admis à l'intérieur de la transmission via le reniflard. De plus, en cas de variation de la pression atmosphérique, les échanges via le reniflard permettent de limiter la différence de pression entre l'intérieur et l'extérieur du carter.

La fonction du reniflard permet en outre de protéger la boîte de vitesse contre le risque de pénétration d'impuretés lors de la circulation d'air (particules polluantes telles que poussière ou boue, projection d'eau) qui peuvent occasionner une usure prématurée de la boîte de vitesse.

### Technique antérieure.

Généralement, le reniflard est constitué par un simple tuyau de mise à l'air libre qui débouche à l'extérieur en un endroit qui est en principe protégé à l'égard de la pénétration d'impuretés.

Dans certains cas, comme cela est décrit notamment dans le document US 5 024 345, le reniflard comprend en plus d'un tuyau flexible, un capuchon d'évent en plastique formé d'une seule pièce dont l'extrémité ouverte est adaptée pour recevoir une extrémité du tuyau flexible, l'autre extrémité du tuyau étant reliée à un trou d'évent dans un boîtier renfermant un composant du véhicule. L'extrémité fermée du capuchon d'évent comprend un élément de tige central faisant saillie axialement à partir de celui-ci, avec une pluralité de nervures radiales reliant l'élément de tige à la paroi latérale cylindrique du capuchon. Ces nervures radiales sont en forme de L et définissent avec la tige un espace concentrique adapté pour recevoir de manière flexible une portion d'extrémité du tuyau.

Lors de l'insertion du tuyau dans le capuchon, les surfaces interne et externe du tuyau coopèrent avec la structure du capuchon pour définir des passages d'écoulement axial interne et externe communiquant avec un passage d'écoulement croisé permettant la ventilation du boîtier vers l'atmosphère.

L'inconvénient du capuchon décrit dans cet art antérieur est que sa configuration est peu adaptée pour retenir des tuyaux réalisés dans un matériau rigide. En effet, le capuchon produit un serrage extérieur du tuyau par pincement de ce dernier.

Par conséquent, afin d'assurer un pincement efficace du tuyau et ainsi permettre le raccordement fiable du tuyau et du capuchon, il est préférable que le tuyau soit réalisé dans un matériau déformable et souple. Par exemple, le tuyau est préférentiellement réalisé en caoutchouc.

Or, le coût de fabrication des tuyaux en matériau déformable tel que du caoutchouc est plus élevé généralement que le coût de fabrication des tuyaux en matériau rigide.

Il peut être de ce fait souhaitable d'équiper le reniflard de tuyaux réalisés en matériau rigide afin de réduire le coût global de fabrication du reniflard comprenant le capuchon et le tuyau, sans rendre plus complexe pour autant la fabrication du capuchon lui-même.

### Résumé de l'invention

A cet effet, l'invention a pour objet un capuchon d'aération adapté pour être monté autour d'une extrémité d'un tuyau, en particulier destiné à être raccordé à l'autre extrémité à une ouverture prévue d'un composant automobile, ledit capuchon comprenant un corps extérieur pourvu d'une paroi latérale périphérique d'axe principal X fermée par une paroi d'extrémité, un organe de tige central faisant saillie axialement à partir d'une surface interne de la paroi d'extrémité et étant pourvu d'un canal intérieur d'aération débouchant transversalement au moins à la base de l'organe de tige en position de montage du tuyau, dans lequel l'organe de tige est pourvu à son extrémité libre d'un élément de retenue autour duquel le tuyau vient s'emmancher, l'élément de retenue étant configuré pour retenir le tuyau emmanché serré autour de l'organe de tige, **caractérisé en ce que** la course d'emmanchement du tuyau le long de l'organe de tige est limitée par au moins une nervure en relief à partir de la surface interne de la paroi d'extrémité formant butée de fin de course **et en ce que** la nervure s'étend longitudinalement radialement depuis l'organe de tige jusqu'à la paroi cylindrique intérieure.

Grâce à l'invention, le capuchon est adapté pour retenir tout type de tuyaux flexibles ou rigides. En effet, avec l'organe de tige muni de l'élément de retenue, la retenue du tuyau est réalisée au moyen d'un serrage par l'intérieur et non plus par pincement de matière comme dans l'art antérieur. Il est ainsi possible de raccorder un tuyau rigide sur l'organe de tige.

Un capuchon selon l'invention peut en outre comporter l'une ou plusieurs des caractéristiques suivantes.

Dans un mode de réalisation préféré de l'invention, l'élément de retenue comprend un embout tronconique s'évasant depuis l'extrémité libre de l'organe de tige et se prolongeant par un tronçon cylindrique formant un épaulement sous l'embout.

Dans un mode de réalisation préféré de l'invention, la course d'emmanchement du tuyau le long de l'organe de tige est limitée par au moins une nervure formant butée en relief à partir de la surface interne de la paroi d'extrémité.

Dans un mode de réalisation préféré de l'invention, la nervure s'étend longitudinalement radialement depuis l'organe de tige jusqu'à la paroi cylindrique intérieure.

Dans un autre mode de réalisation préféré, le capuchon est formé d'une seule pièce et est obtenu par moulage.

Dans un autre mode de réalisation préféré, le capuchon comprend au moins deux pièces assemblées ensemble, la première pièce comprenant le corps extérieur et la deuxième pièce comprenant l'organe de tige.

Dans un autre mode de réalisation préféré, l'organe de tige présente à sa base au moins un orifice d'aération et un relief de butée de fin de course du tuyau.

Dans un autre mode de réalisation préféré, la paroi d'extrémité du corps extérieur est pourvue d'une ouverture de réception de l'organe de tige par encliquetage en force.

Dans un autre mode de réalisation préféré, l'élément de retenue est muni d'au moins deux fentes axiales partant de l'extrémité libre de l'organe de tige afin de délimiter au moins deux lobes axiaux aptes à se rapprocher élastiquement mutuellement vers l'intérieur lors de l'emmanchement du tuyau.

Dans un autre mode de réalisation préféré, l'organe de tige est muni d'une pluralité de fentes axiales afin de délimiter autant de lobes axiaux.

Dans un autre mode de réalisation préféré, les fentes axiales s'étendent depuis l'extrémité libre de l'organe de tige jusqu'à la surface interne de la paroi d'extrémité du capuchon et se prolongent au-delà de la limite de la course du tuyau pour former des passages d'écoulement de l'air du canal central d'aération entre une extrémité du tuyau et la paroi d'extrémité.

Dans un autre mode de réalisation, les lobes axiaux sont séparés les uns des autres et sont formés à partir de la surface interne de la paroi d'extrémité.

Dans un autre mode de réalisation préféré, les lobes axiaux sont répartis régulièrement autour de l'axe et délimitent ensemble le canal d'aération.

Dans un autre mode de réalisation préféré, chaque lobe a une surface interne en forme générale d'une surface interne d'un tronçon de paroi d'un cylindre creux.

Dans un autre mode de réalisation préféré, les lobes axiaux sont conformés pour se rapprocher vers l'intérieur de l'organe de tige afin de composer à leur extrémité un contour circulaire sensiblement fermé délimitant une entrée du canal d'aération.

Dans un autre mode de réalisation préféré, l'organe de tige s'étend intégralement à l'intérieur du volume intérieur délimité par la paroi d'extrémité et la paroi périphérique du capuchon.

### Brève description des dessins

D'autres caractéristiques et avantages de l'invention apparaîtront à la lumière de la description qui suit, faite en référence aux dessins annexes dans lesquels :
**Fig.1** est une vue en perspective partielle d'un carter de transmission d'un véhicule automobile auquel est relié à distance, au moyen d'un tuyau, un capuchon d'aération selon un mode de réalisation préféré de l'invention ;
**Fig.2** est une vue en perspective du capuchon de la figure 1 ;
**Fig.3** illustre une vue en écorché du capuchon de la figure 2 ;
**Fig.4** est une vue de dessus du capuchon de la figure 2;
**Fig.5** st une vue en écorché du capuchon de la figure 2 après emmanchement d'un tuyau de raccordement du capuchon au carter de transmission illustrant une phase d'admission d'air ;
**Fig.6** est une vue en écorché du capuchon de la figure 2 après emmanchement d'un tuyau de raccordement du capuchon au carter de transmission illustrant une phase de refoulement d'air.
**Fig.7** est une vue en coupe d'un capuchon selon un deuxième mode de réalisation de l'invention.

### Description des modes de réalisation

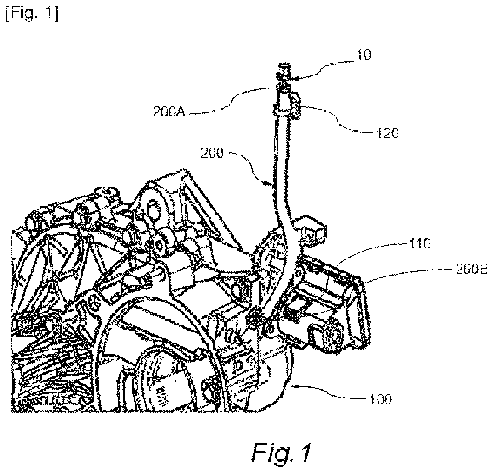

On a représenté sur **la** **figure 1** une vue partielle d'un carter de transmission 100. Le carter 100 comprend par exemple un connecteur de purge d'air 110 adjacent à une ouverture d'aération (non représenté) ménagée dans le carter 100. Par exemple, le connecteur 110 est muni d'un collier d'étanchéité de conduit recevant une extrémité inférieure 200B d'un conduit creux 200 ou tuyau. L'extrémité supérieure libre 200A du tuyau 200 est par exemple supportée sur un élément de cadre du véhicule par une agrafe de fixation ou un clip de fixation approprié 120.

Un capuchon d'aération selon l'invention est adapté pour être reçu sur l'extrémité supérieure 200A du tuyau 200 comme cela est visible sur **la** **figure 1****.** Ce capuchon est désigné par la suite par la référence générale 10. Ce capuchon 10 est adapté pour être monté autour de l'extrémité 200A du tuyau 200. L'autre extrémité 200B du tuyau 200 est destinée à être raccordée, comme cela a déjà été indiqué ci-dessus, par exemple à une ouverture prévue dans un boîtier d'un composant automobile (non représentée) tel que le carter de transmission 100 représenté sur **la** **figure 1****.**

Des premier et deuxième modes de réalisation du capuchon 10 selon l'invention vont être décrits plus en détail en référence **aux** **figures 1 à 7****.**

Conformément à l'invention, le capuchon 10 comprend un corps extérieur 11 pourvu d'une paroi latérale périphérique 12 d'axe principal X et fermée par une paroi d'extrémité 14. De préférence, le capuchon 10 présente à son autre extrémité, une ouverture 16 de passage du tuyau 200 délimitée par un rebord formé circonférentiellement par la paroi cylindrique 12. Dans l'exemple illustré sur les figures, le capuchon 10 a une forme générale cylindrique. Bien entendu, d'autres formes peuvent convenir pour réaliser la paroi périphérique.

En outre, le capuchon 10 comprend un organe de tige central 18 faisant saillie axialement à partir de la surface interne 14l de la paroi d'extrémité 14. Afin de permettre l'aération de la boîte de vitesse 100 lorsque le capuchon 10 est monté sur le tuyau 200, l'organe de tige 18 est pourvu d'un canal intérieur 20 d'aération débouchant radialement au moins à la base de l'organe de tige 18 en position de montage du tuyau 200 afin de permettre une circulation de l'air. De préférence, le canal d'aération 20 est de section transversale sensiblement circulaire.

Les passages d'écoulement d'air 40 à la base de l'organe de tige 18 permettent la circulation de l'air depuis le canal d'aération 20 vers l'extérieur et inversement. De préférence, la structure de la surface interne du capuchon 10 coopère avec le tuyau 200 à l'état monté autour de l'organe de tige 18 pour définir des passages 40 d'écoulement transversaux, et dans ce cas précis, radiaux, au niveau de la base de l'organe de tige 18 permettant la ventilation du boîtier 100 vers l'atmosphère.

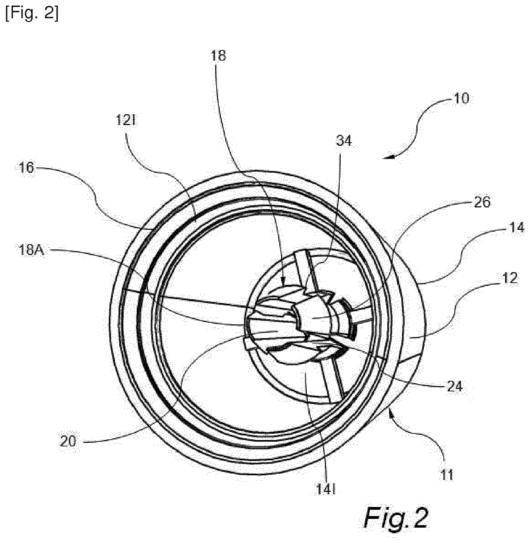

De préférence et comme cela est visible notamment sur **la** **figure 2****,** l'organe de tige 18 s'étend intégralement à l'intérieur du volume intérieur délimité par la paroi d'extrémité 14 et la paroi périphérique 12 du capuchon 10. Ainsi, le sommet ou extrémité libre 18A de l'organe de tige 18 s'étend en retrait de l'ouverture de passage du capuchon 10.

En outre, plus particulièrement, l'organe de tige 18 est pourvu à son extrémité libre 18A d'un élément de retenue 22 autour duquel le tuyau 200 vient s'emmancher. Conformément à l'invention, l'élément de retenue 22 est configuré pour retenir le tuyau 100 emmanché serré autour de l'organe de tige 18.

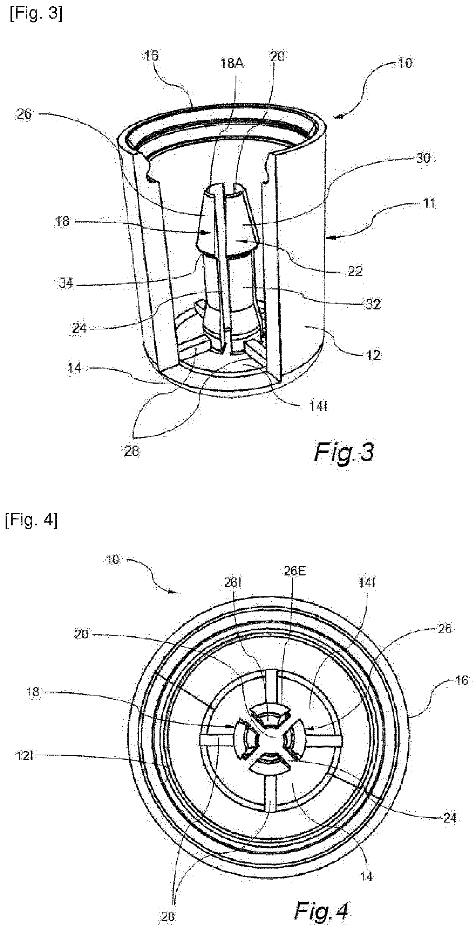

De préférence, l'élément de retenue 22 comprend un embout tronconique 30 s'évasant depuis l'extrémité libre 18A de l'organe de tige 18 et se prolongeant par un tronçon cylindrique 32 formant un épaulement 34 sous l'embout 30. Un tel élément de connexion 22 est également connu sous le nom d'embout d'emmanchement à cran sapin. Ainsi, comme cela est visible **en** **figure 3****,** l'embout 30 est un embout mâle en forme générale de sapin ou de flèche. Bien entendu, bien que non illustré sur les figures, l'embout 30 peut comporter, en variante, une pluralité de barbelures circonférentielles pour former un autre type de configuration de cran sapin.

Par ailleurs, de préférence la course d'emmanchement du tuyau 200 le long de l'organe de tige 18 est limitée par au moins une nervure 28 formant butée et ménagée en saillie sur la surface interne 14l de la paroi d'extrémité 14.

Ainsi, dans le premier mode de réalisation préféré illustré par **les** **figures 2 à 4****,** le capuchon 10 comprend quatre nervures radiales 28 uniformément espacées et rayonnant depuis l'organe de tige 18 d'une manière symétrique. De préférence, chaque nervure 28 s'étend radialement en relief sur la surface interne 14l de la paroi d'extrémité 14 depuis l'organe de tige 18 jusqu'à la surface interne 12l de la paroi cylindrique 12 du capuchon 10.

Dans ce premier mode de réalisation, le capuchon 10 est formé d'une seule pièce par exemple par un procédé de moulage par injection. Par exemple, le capuchon 10 est réalisé dans une matière plastique telle que du polyamide.

De préférence, dans ce premier mode de réalisation, l'élément de retenue 22 est muni d'au moins deux fentes axiales 24 partant de l'extrémité libre 18A de l'organe de tige 18. Ces deux fentes axiales 24 délimitent au moins deux lobes axiaux 26 aptes à se rapprocher élastiquement mutuellement vers l'intérieur lors de l'emmanchement du tuyau 200. Ces lobes axiaux 26 forment préférentiellement des projections flexibles en forme de dent ou globalement en forme de tronçon de cylindre partant de préférence de la surface interne 14l de la paroi d'extrémité 14. En outre, dans cet exemple, à la base de l'organe de tige 18 et donc à la base de chaque lobe axial 26, l'épaisseur radiale augmente légèrement de sorte que le pied de chaque lobe axial 26 est épaissi.

Dans l'exemple illustré sur **les** **figures 2 à 4****,** l'élément de retenue 22 est muni de quatre fentes axiales 24 afin de délimiter quatre lobes axiaux 26. La disposition des lobes 26 est de préférence en symétrie par image miroir.

De préférence, comme cela est représenté à **la** **figure 2****,** chaque lobe axial 26 présente une surface interne 26l, tournée vers le canal d'aération 20, en forme générale d'une surface interne d'un tronçon longitudinal de paroi d'un cylindre creux. Les différentes surfaces internes 261 des lobes axiaux 26 délimitent ainsi ensemble la paroi intérieure du canal d'aération 26.

Chaque fente axiale 24 est ménagée depuis l'extrémité libre 18A de l'organe de tige 18 au moins jusqu'au deux tiers de profondeur du tronçon cylindrique 32 permettant de fournir de l'élasticité aux lobes 26 de l'embout 30 aptes à se rapprocher l'un de l'autre, notamment lors de l'emmanchement du tuyau 200 autour de l'organe de tige 18. Par ailleurs, ces fentes axiales 24 présentent l'avantage d'offrir une flexion élastique suffisante à l'organe de tige 18 pour faciliter l'emmanchement du tuyau 200 mais encore également d'offrir une flexion des lobes 26 facilitant le démoulage du capuchon 10 lorsque ce dernier est fabriqué par une opération de moulage et nécessite en conséquence une opération de démoulage.

De préférence, les lobes axiaux 26 sont conformés pour se rapprocher vers l'intérieur de l'organe de tige 18 pour composer ensemble en extrémité un contour circulaire sensiblement fermé. Ce contour circulaire fermé délimite un orifice d'entrée du canal d'aération 20. Ainsi, dans l'exemple décrit, chaque lobe axial 26 présente une section de cercle en extrémité qui en se rapprochant mutuellement reconstitue un cercle sensiblement fermé comme cela ressort clairement de **la** **figure 4****.**

De préférence et comme cela est visible sur **la** **figure 2****,** les fentes axiales 24 s'étendent depuis l'extrémité libre 18A de l'organe de tige 18 sensiblement jusqu'à la surface interne 14l de la paroi d'extrémité 14 du capuchon 10. Ceci permet de fournir en plus d'une élasticité de l'organe de tige 18 à son extrémité libre pour former un élément de retenue élastique 22, des passages 40 de circulation de l'air à la base de l'organe de tige 18 comme cela va être expliqué plus en détail ci-dessous.

Dans ce premier mode de réalisation, les fentes axiales 24 se prolongent au-delà de la limite de la course du tuyau 200 pour délimiter les passages 40 de circulation de l'air du canal central d'aération 20 entre une extrémité du tuyau 200 et la paroi d'extrémité 14.

De préférence, le capuchon 10 comprend autant de nervures 28 que de lobes axiaux 26 et chaque nervure 28 relie un lobe axial 26 à la paroi cylindrique 12 du capuchon 10.

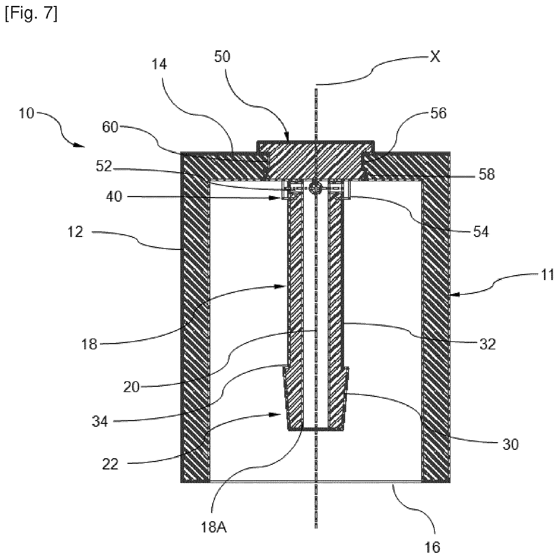

On a représenté sur **la** **figure 7** un capuchon 10 selon le deuxième mode de réalisation de l'invention. Dans ce deuxième mode de réalisation, les éléments analogues à ceux du premier mode de réalisation portent des références identiques.

Dans ce deuxième mode de réalisation, à la différence du premier mode de réalisation, l'organe de tige 18 est dépourvu de fentes axiales partant de l'extrémité 18A.

L'organe de tige 18 est de préférence muni à sa base 50 d'au moins un orifice d'aération 52. Dans l'exemple illustré, l'organe de tige 18 présente un canal d'aération 20 muni d'une pluralité d'orifices d'aération 52 débouchant à sa base 50 formant les passages 40 d'écoulement de l'air circulant dans le canal d'aération 20. En outre, dans l'exemple illustré sur **la** **figure 7****,** l'organe de tige 18 présente à sa base 50 un relief 54 de butée de fin de course d'emmanchement du tuyau 200.

Afin de simplifier la fabrication du capuchon 10 selon le deuxième mode de réalisation, le capuchon 10 est réalisé en deux parties, une première pièce formant le corps extérieur 11 du capuchon 10, c'est-à-dire la paroi cylindrique extérieure 12 ainsi que la paroi d'extrémité 14 et une deuxième pièce formant l'organe de tige 18.

De préférence, les deux pièces 11 et 18 sont assemblées en force. Par exemple, le corps extérieur 11 est muni d'une ouverture 56 de réception de l'organe de tige 18 par encliquetage en force. Par exemple, l'ouverture de réception 56 et la base 50 de l'organe de tige 18 comprennent des moyens d'encliquetage complémentaires aptes à coopérer de façon classique pour permettre un couplage par encliquetage en force des deux pièces entre elles.

Dans l'exemple illustré, la base 50 de l'organe de tige 18 présente un profil extérieur en gradin afin de délimiter d'une part en partie inférieure de la base 50 un profil d'encliquetage complémentaire avec un profil interne de l'ouverture de réception 56 et d'autre part en partie supérieure de la base 50 le relief 56 de butée faisant saillie à l'intérieur du capuchon 10. Par "encliquetage" on entend en particulier tout moyen impliquant le franchissement d'un bourrelet 60 par déformation élastique d'un ergot 58, puis par retour en position non contrainte élastiquement dudit ergot 58 après le franchissement du bourrelet 60 comme cela est illustré sur **la** **figure 7****.**

Bien entendu, en variante, il est possible d'envisager tout moyen d'assemblage en force ou d'autres opérations d'assemblage des deux pièces entre elles sans sortir du cadre de l'invention.

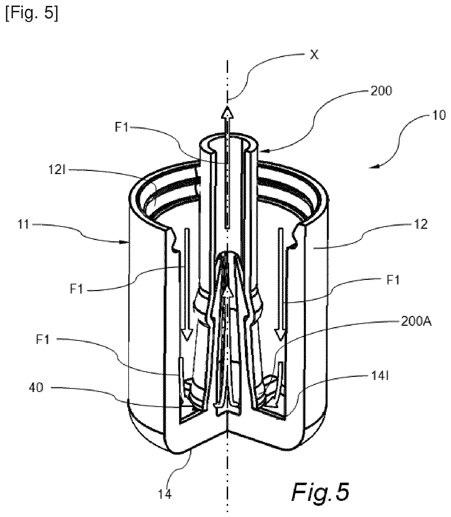

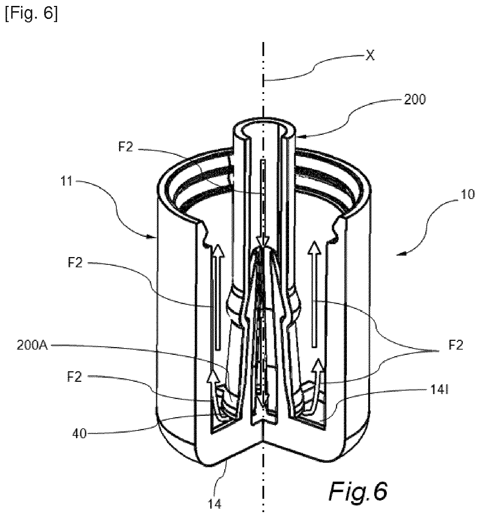

On va maintenant décrire les principaux aspects de fonctionnement du capuchon d'aération selon le premier mode de réalisation de l'invention, notamment en référence **aux** **figures 5** **et** **6****.**

Tout d'abord, on insère l'extrémité 18A de l'organe de tige 18 formant l'élément de retenue 22 à l'intérieur de l'ouverture circulaire du tuyau 200. Lorsque l'embout tronconique 30 est poussé en force dans l'ouverture circulaire du tuyau 200, ce dernier est retenu à l'organe de tige 18. Dans le premier mode de réalisation, lors de cette étape d'emmanchement, les lobes 26 de l'organe de tige 18 sont adaptés pour se rapprocher les uns des autres grâce à l'élasticité fournie par la présence des fentes axiales 24 facilitant l'opération d'emmanchement puis à venir exercer une force de rétention par retour élastique.

En outre, lors de l'emmanchement du tuyau 200, la course de ce dernier est arrêtée par les nervures en butée 28 sans atteindre la surface interne 14l de la paroi d'extrémité 14 du capuchon 10. Il subsiste donc au moins un passage 40 d'écoulement de l'air formé par l'extrémité des fentes axiales 24 et délimité d'une part par les faces latérales de lobes axiaux 26 et d'autre part par l'extrémité 200A du tuyau 200 et la surface interne 14l de la paroi d'extrémité 14.

Comme cela est visible sur **la** **figure 5****,** lorsque la pression intérieure à l'intérieur de la boîte de transmission 100 est inférieure à la pression atmosphérique, de l'air extérieur est admis vers l'intérieur du capuchon 10 selon le sens de circulation des flèches F1 en passant dans un premier temps dans l'espace entre la paroi cylindrique 12 et la surface extérieure du tuyau 200, puis par les passages d'écoulement 40 à la base de l'organe de tige 18 pour enfin s'écouler à l'intérieur du canal d'aération 20.

Inversement, sur **la** **figure 6****,** lorsque la pression intérieure est supérieure à la pression atmosphérique, l'air intérieur de la boîte de vitesse 100 est refoulé vers l'extérieur du capuchon 10 selon le sens de circulation des flèches F2 dans le sens contraire aux flèches F1 de **la** **figure 5****.**

Concernant le second mode de réalisation du capuchon selon l'invention illustré **en** **figure 7**, une première étape d'assemblage de l'organe de tige 18 et du corps extérieur 11 est réalisée. Ainsi, l'organe de tige 18 est introduit par l'extérieur de la paroi d'extrémité 14 et engagé au travers de l'ouverture de réception 56 jusqu'à ce que l'ergot d'encliquetage 58 formé par le profil externe de la base 50 vienne franchir le bourrelet 60 formé par le profil interne de l'ouverture de réception 56. Les étapes suivantes sont alors sensiblement analogues à celles déjà décrites ci-dessus.

Bien entendu, l'invention ne se limite pas aux modes de réalisation précédemment décrits. D'autres modes de réalisation à la portée de l'homme du métier peuvent aussi être envisagés sans sortir du cadre de l'invention défini par les revendications ci-après.

## Revendications

1. Capuchon (10) d'aération adapté pour être monté autour d'une extrémité (200A) d'un tuyau (200) destiné à être raccordé à l'autre extrémité (200B) à une ouverture prévue dans un boîtier (100) d'un composant automobile, ledit capuchon (10) comprenant un corps extérieur (11) avec une paroi latérale périphérique (12) autour d'un axe principal (X) fermée par une paroi d'extrémité (14), un organe de tige central (18) faisant saillie axialement à partir d'une surface interne (14l) de la paroi d'extrémité (14) et étant pourvu d'un canal intérieur (20) d'aération débouchant transversalement au moins à la base de l'organe de tige (18) en position de montage du tuyau (200), et dans lequel l'organe de tige (18) est pourvu à son extrémité libre (18A) d'un élément de retenue (22) autour duquel le tuyau (200) vient s'emmancher, l'élément de retenue (22) étant configuré pour retenir le tuyau (200) emmanché serré autour de l'organe de tige (18) **caractérisé en ce que** la course d'emmanchement du tuyau (200) le long de l'organe de tige (18) est limitée par au moins une nervure (28) en relief à partir de la surface interne (14l) de la paroi d'extrémité (14) formant butée de fin de course **et en ce que** la nervure (28) s'étend longitudinalement radialement depuis l'organe de tige (18) jusqu'à la paroi cylindrique intérieure (12).

2. Capuchon (10) selon la revendication précédente, dans lequel l'élément de retenue (22) comprend un embout tronconique (30) s'évasant depuis l'extrémité libre (18A) de l'organe de tige (18) et se prolongeant par un tronçon cylindrique (32) formant un épaulement (34) sous l'embout (30).

3. Capuchon (10) selon l'une quelconque des revendications précédentes, étant d'une seule pièce et obtenu par moulage.

4. Capuchon (10) selon la revendication 1 ou 2, comprenant au moins deux pièces assemblées ensemble, la première pièce comprenant le corps extérieur (11) et la deuxième pièce comprenant l'organe de tige (18).

5. Capuchon (10) selon la revendication précédente, dans lequel l'organe de tige (18) présente à sa base (50) au moins un orifice d'aération (52) et un relief (54) de butée de fin de course du tuyau (200).

6. Capuchon (10) selon la revendication 4 ou 5, dans lequel la paroi d'extrémité (14) du corps extérieur (11) est pourvue d'une ouverture de réception (56) de l'organe de tige (18) pour coupler par encliquetage en force le corps extérieur (11) et l'organe de tige (18).

7. Capuchon (10) selon l'une quelconque des revendications précédentes, dans lequel l'élément de retenue (22) est muni d'au moins deux fentes axiales (24) partant de l'extrémité libre (18A) de l'organe de tige (18) afin de délimiter au moins deux lobes axiaux (26) aptes à se rapprocher élastiquement mutuellement vers l'intérieur lors de l'emmanchement du tuyau (200).

8. Capuchon (10) selon la revendication précédente, dans lequel l'organe de tige (18) est muni d'une pluralité de fentes axiales (24) afin de délimiter autant de lobes axiaux (26).

9. Capuchon (10) selon la revendication 7 ou 8, dans lequel les fentes axiales (24) s'étendent depuis l'extrémité libre (18A) de l'organe de tige (18) jusqu'à la surface interne (14l) de la paroi d'extrémité (14) du capuchon (10) et se prolongent au-delà de la limite de la course du tuyau (200) pour former des passages (40) d'écoulement de l'air du canal central d'aération (20) entre une extrémité (200A) du tuyau (200) et la paroi d'extrémité (14).

10. Capuchon (10) selon l'une quelconque des revendications 7 à 9, dans lequel les lobes axiaux (26) sont séparés les uns des autres et sont formés à partir de la surface interne (14l) de la paroi d'extrémité (14).

11. Capuchon (10) selon l'une quelconque des revendications 7 à 10, dans lequel les lobes axiaux (26) sont répartis régulièrement autour de l'axe (X) et délimitent ensemble le canal d'aération (20).

12. Capuchon (10) selon l'une quelconque des revendications 7 à 11, dans lequel chaque lobe (26) a une surface interne en forme générale d'une surface interne d'un tronçon de paroi d'un cylindre creux.

13. Capuchon (10) selon l'une quelconque des revendications 7 à 12, dans lequel les lobes axiaux (26) sont conformés pour se rapprocher vers l'intérieur de l'organe de tige (18) afin de composer à leur extrémité un contour circulaire sensiblement fermé délimitant une entrée du canal d'aération (20).

14. Capuchon (10) selon l'une quelconque des revendications précédentes, dans lequel l'organe de tige (18) s'étend intégralement à l'intérieur du volume intérieur délimité par la paroi d'extrémité (14) et la paroi périphérique (12) du capuchon (10).
